# FASCICULE DE BREVET EUROPEEN

(11) **EP 2 379 568 B1**
(45) Date de publication et mention de la délivrance du brevet: **14.08.2013**
(21) Numéro de dépôt: 09797037.0
(22) Date de dépôt: 18.12.2009
(51) Int. Cl.: C07F 7/18, C08K 3/36

(54) **AGENT DE COUPLAGE MERCAPTOSILANE BLOQUE**
BLOCKIERTES MERCAPTOSILANKUPPLUNGSMITTEL
BLOCKED MERCAPTOSILANE COUPLING AGENT

(30) Priorité: 22.12.2008 FR 0858931
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: SEEBOTH, Nicolas, F-63040 Clermont-Ferrand Cedex 9 (FR); LONGCHAMBON, Karine, F-63110 Beaumont (FR); BELIN, Laure, F-63200 Riom (FR); ARAUJO DA SILVA, José Carlos, F-63430 Pont du Chateau (FR)
(74) Mandataire: Cohen, Sylvia
(86) Numéro de dépôt international: PCT/EP2009/067554
(87) Numéro de publication internationale: WO 2010/072685

(56) Documents cités:
- WO-A-2005/007660

## Description

La présente invention se rapporte aux agents de couplage mercaptosilane, utilisables notamment pour le couplage de charges inorganiques renforçantes et d'élastomères diéniques dans des compositions de caoutchouc destinées par exemple à la fabrication de pneumatiques.

On sait que d'une manière générale, pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes, ce qui n'est en général pas le cas des charges inorganiques. En effet, pour des raisons d'affinités réciproques, les particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("processabilité") plus difficile qu'en présence de noir de carbone.

Depuis que les économies de carburant et la nécessité de protéger l'environnement sont devenues une priorité, il s'est avéré cependant nécessaire de produire des pneumatiques ayant une résistance au roulement réduite, sans pénalisation de leur résistance à l'usure. Ceci a été rendu possible notamment grâce à la découverte de nouvelles compositions de caoutchouc renforcées de charges inorganiques spécifiques qualifiées de "renforçantes", capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant.

De telles compositions de caoutchouc, comportant des charges inorganiques renforçantes du type siliceuses ou alumineuses, ont par exemple été décrites dans les brevets ou demandes de brevet EP-A-0501227 (ou US-A-5227425), EP-A-0735088 (ou US-A-5852099), EP-A-0810258 (ou US-A-5900449), EP-A-0881252, WO99/02590, WO99/02601, WO99/02602, WO99/28376, WO00/05300, WO00/05301.

On citera en particulier les documents EP-A-0501227, EP-A-0735088 ou EP-A-0881252 qui divulguent des compositions de caoutchouc diénique renforcées de silices précipitées à haute dispersibilité, de telles compositions permettant de fabriquer des bandes de roulement ayant une résistance au roulement nettement améliorée, sans affecter les autres propriétés en particulier celles d'adhérence, d'endurance et de résistance à l'usure. De telles compositions présentant un tel compromis de propriétés contradictoires sont également décrites dans les demandes EP-A-0810258 et WO99/28376, avec à titre de charges inorganiques renforçantes des charges alumineuses (alumines ou (oxyde)hydroxydes d'aluminium) spécifiques à dispersibilité élevée, ou encore dans les demandes WO00/73372 et WO00/73373 décrivant des oxydes de titane spécifiques du type renforçants.

L'utilisation de ces charges inorganiques spécifiques, hautement dispersibles, à titre de charge renforçante majoritaire ou non, a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la liaison entre la surface des particules de charge inorganique et l'élastomère, tout en facilitant la dispersion de cette charge inorganique au sein de la matrice élastomérique.

On rappelle ici que par "agent de couplage" (charge inorganique/élastomère), on doit entendre, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-W-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- W représente un groupe divalent permettant de relier Y et X.

Les agents de couplage ne doivent en particulier pas être confondus avec de simples agents de recouvrement de charge inorganique qui, de manière connue, peuvent comporter la fonction Y active vis-à-vis de la charge inorganique mais sont dépourvus de la fonction X active vis-à-vis de l'élastomère diénique.

Des agents de couplage, notamment (silice/élastomère diénique), ont été décrits dans un grand nombre de documents, les plus connus étant des organosilanes bifonctionnels porteurs d'au moins une fonction alkoxyle à titre de fonction Y, et, à titre de fonction X, d'au moins une fonction capable de réagir avec l'élastomère diénique telle que par exemple une fonction soufrée (i.e., comportant du soufre).

Ainsi, il a été proposé dans les demandes de brevet FR-A-2094859 ou GB-A-1310379 d'utiliser un agent de couplage mercaptoalkoxysilane pour la fabrication de bandes de roulement de pneumatiques. Il fut rapidement mis en évidence et il est aujourd'hui bien connu que les mercaptoalkoxysilanes sont susceptibles de procurer d'excellentes propriétés de couplage silice/élastomère, mais que l'utilisation industrielle de ces agents de couplage n'est pas possible en raison de la très forte réactivité des fonctions soufrées type thiols -SH (fonctions X) conduisant très rapidement au cours de la préparation des compositions de caoutchouc, dans un mélangeur interne, à des vulcanisations prématurées encore appelées "grillage" ("*scorching*"), à des viscosités à l'état cru très élevées, en fin de compte à des compositions de caoutchouc quasiment impossibles à travailler et à mettre en oeuvre industriellement. Pour illustrer ce problème, on peut citer par exemple les documents FR-A-2206330, US-A-3873489, US-A-4002594.

Pour remédier à cet inconvénient, il a été proposé de remplacer ces mercaptoalkoxysilanes par des polysulfures d'alkoxysilanes, notamment des polysulfures de bis-(alkoxylsilylpropyle) tels que décrits dans de très nombreux documents (voir par exemple FR-A-2149339, FR-A-2206330, US-A-3842111, US-A-3873489, US-A-3997581, EP-A-680997 ou US-A-5650457, EP-A-791622 ou US-A-5733963, DE-A-19951281 ou EP-A-1043357, WO00/53671). Parmi ces polysulfures, doivent être cités notamment le tétrasulfure de bis 3-triéthoxysilylpropyle (en abrégé TESPT) et le disulfure de bis 3-triéthoxysilylpropyle (en abrégé TESPD).

Ces polysulfures d'alkoxysilanes, en particulier le TESPT, sont généralement considérés comme les produits apportant, pour des vulcanisats comportant une charge inorganique renforçante, en particulier de la silice, le meilleur compromis en termes de sécurité au grillage, de facilité de mise en oeuvre et de pouvoir renforçant. Ils sont à ce titre les agents de couplage les plus utilisés aujourd'hui dans les compositions de caoutchouc pour pneumatiques, même s'ils sont relativement onéreux et, qui plus est, doivent être utilisés le plus souvent dans une quantité relativement importante.

Or la vulcanisation des élastomères diéniques par le soufre est largement utilisée dans l'industrie du caoutchouc, en particulier dans celle du pneumatique. Pour vulcaniser les élastomères diéniques, on utilise un système de vulcanisation relativement complexe comportant, en plus du soufre, divers accélérateurs de vulcanisation ainsi qu'un ou plusieurs activateurs de vulcanisation, tout particulièrement des dérivés du zinc tels que l'oxyde de zinc (ZnO), des sels de zinc d'acides gras tels que le stéarate de zinc.

Un objectif à moyen terme des manufacturiers de pneumatiques est de supprimer le zinc ou ses dérivés de leurs formulations de caoutchouterie, en raison du caractère relativement toxique connu de ces composés, notamment vis-à-vis de l'eau et des organismes aquatiques (classement R50 selon directive européenne 67/548/CE du 9 décembre 1996).

Il se trouve toutefois que la suppression de l'oxyde de zinc, spécifiquement dans des compositions de caoutchouc renforcées d'une charge inorganique telle que silice, pénalise très fortement les caractéristiques de mise en oeuvre ("processabilité") des compositions de caoutchouc à l'état cru, avec une réduction du temps de grillage qui est rédhibitoire du point de vue industriel. On rappelle que le phénomène dit de "grillage" conduit rapidement, au cours de la préparation des compositions de caoutchouc dans un mélangeur interne, à des vulcanisations prématurées ("*scorching*"), à des viscosités à l'état cru très élevées, en fin de compte à des compositions de caoutchouc quasiment impossibles à travailler et à mettre en oeuvre industriellement.

Or l'agent de couplage TESPT ne convient pas aux compositions dépourvues de zinc ou quasiment dépourvues de zinc.

Or, les Demanderesses ont découvert lors de leurs recherches des mercaptosilanes bloqués nouveaux et spécifiques qui, de manière inattendue, permettent de pallier l'ensemble de ces inconvénients et donc, en particulier, d'être utilisé en tant qu'agent de couplage de compositions de caoutchouc renforcées d'une charge inorganique telle que silice, en l'absence ou en présence d'une très faible quantité de zinc sans que ce dernier ne soit remplacé par un autre métal et tout en préservant les compositions de caoutchouc du problème de grillage prématuré lors de leur mise en oeuvre industrielle.

On rappelle ici que les mercaptosilanes bloqués, de manière bien connue de l'homme du métier, sont des précurseurs de silanes susceptibles de former des mercaptosilanes au cours de la préparation des compositions de caoutchouc (voir par exemple US 2002/0115767 A1 ou la demande internationale WO 02/48256). Les molécules de ces précurseurs de silane, dénommées ci-après mercaptosilanes bloqués, ont un groupement bloquant à la place de l'atome d'hydrogène du mercaptosilane correspondant. Les mercaptosilanes bloqués sont susceptibles d'être débloqués par remplacement du groupement bloquant par un atome d'hydrogène, au cours du mélangeage et de la cuisson, pour conduire à la formation d'un mercaptosilane plus réactif, défini comme un silane dont la structure moléculaire contient au moins un groupement thiol (-SH) (mercapto-) lié à un atome de carbone et au moins un atome de silicium. Ces agents de couplage de mercaptosilane bloqué peuvent être utilisés seul ou en présence d'activateur de mercaptosilane bloqué dont le rôle est d'amorcer, d'accélérer ou d'amplifier l'activité du mercaptosilane bloqué.

En conséquence, un premier objet de l'invention concerne un mercaptosilane bloqué de formule générale (I) suivante :

(HO)₂R¹-Si-Z-S-C(=O)-A

dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- A représente l'hydrogène ou un groupe hydrocarboné monovalent choisi parmi les alkyles, linéaires ou ramifiés, les cycloalkyles ou les aryles, ayant de 1 à 18 atomes de carbone,
- Z représente un groupe de liaison divalent comportant de 1 à 18 atomes de carbone.

L'invention a d'autre part pour objet un procédé d'obtention d'un mercaptosilane formule générale (I) qui comporte les étapes suivantes :
- on part d'un mercaptosilane bloqué (ci-après produit B) de formule (B):

   (R²O)₂R¹ Si Z S C(=O) A

   - dans laquelle :
   - R¹, A et Z ont la même signification que dans la formule (I) ;
   - R², identiques ou différents, représentent un groupe hydrocarboné monovalent choisi parmi les alkyles ayant de 1 à 6, de préférence de 1 à 3;
- on conduit une hydrolyse en milieu acide permettant d'aboutir au mercaptosilane bloqué de formule (I) visé.

L'invention a également pour objet l'utilisation à titre d'agent de couplage d'un mercaptosilane bloqué conforme à l'invention, en particulier à titre d'agent de couplage (charge inorganique/élastomère diénique) dans une composition de caoutchouc.

### I. MESURES ET TESTS UTILISES

Les compositions de caoutchouc, dans lesquelles sont testés les agents de couplage, sont caractérisées avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### I-2. Temps de grillage

Les mesures sont effectuées à 130°C, conformément à la norme française NF T 43-005. L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Propriétés dynamiques :

Les propriétés dynamiques ΔG* et tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, à 23°C ou 40°C. On effectue un balayage en amplitude de déformation de 0,1 à 50% (cycle aller), puis de 50% à 1% (cycle retour). Les résultats exploités sont le module complexe de cisaillement dynamique (G*) et le facteur de perte (tan δ). Pour le cycle retour, on indique la valeur maximale de tan δ observée (tan(δ)ₘₐₓ), ainsi que l'écart de module complexe (ΔG*) entre les valeurs à 0,1% et à 50% de déformation (effet Payne).

### II. CONDITIONS DE REALISATION DE L'INVENTION

### II-1. Mercaptosilane bloqué de l'invention

Le premier objet de l'invention est un mercaptosilane formule générale (I) :

(HO)₂R¹-Si-Z-S-C(=O)-A

dans laquelle :
- R¹ représente un groupe hydrocarboné monovalent choisi parmi les alkyles, linéaires ou ramifiés, les cycloalkyles ou les aryles, ayant de 1 à 18 atomes de carbone;
- A représente l'hydrogène ou un groupe hydrocarboné monovalent choisi parmi les alkyles, linéaires ou ramifiés, les cycloalkyles ou les aryles, ayant de 1 à 18 atomes de carbone,
- Z représente un groupe de liaison divalent comportant de 1 à 18 atomes de carbone.

Z peut contenir un ou plusieurs hétéroatomes choisis parmi O, S et N.

Avantageusement :
- R¹ est choisi parmi méthyle, éthyle, n-propyle et isopropyle, de préférence parmi méthyle et éthyle ;
- A est choisi parmi les alkyles ayant de 1 à 18 atomes de carbone et le radical phényle ;
- Z est choisi parmi les alkylènes en C₁-C₁₈ et les arylènes en C₆-C₁₂.

Selon un mode de réalisation, Z est choisi parmi les alkylènes en C₁-C₁₀ et plus préférentiellement Z est choisi parmi les alkylènes en C₁-C₄.

Selon un autre mode de réalisation, R¹ est un méthyle.

Préférentiellement A est choisi parmi les alkyles ayant de 1 à 7 atomes de carbone et le radical phényle.

On citera en particulier le S-octanoyl-mercapto-propyl-dihydroxy-méthylsilane dont la formule (I)° est tel que R1 est un méthyle, Z est un propylène et A est un heptyle.

### II-2. Procédé de synthèse

Le procédé conforme à l'invention, pour préparer un mercaptosilane bloqué de formule (I) précédente comporte les étapes suivantes:
- on part d'un mercaptosilane bloqué (ci-après produit B) de formule (B):
   (R²O)₂R¹-Si-Z-S-C(=O)-A
      dans laquelle :
- R¹ représente un groupe hydrocarboné monovalent choisi parmi les alkyles, linéaires ou ramifiés, les cycloalkyles ou les aryles, ayant de 1 à 18 atomes de carbone;
- R², identiques ou différents, représentent un groupe hydrocarboné monovalent choisi parmi les alkyles ayant de 1 à 6, de préférence de 1 à 3 ;
- A représente l'hydrogène ou un groupe hydrocarboné monovalent choisi parmi les alkyles, linéaires ou ramifiés, les cycloalkyles ou les aryles, ayant de 1 à 18 atomes de carbone,
- Z représente un groupe de liaison divalent comportant de 1 à 18 atomes de carbone.

On notera que le produit B peut être notamment obtenu à partir d'un mercaptosilane « non bloqué » en lui faisant subir une thio-esthérification.

On conduit une hydrolyse en milieu acide permettant d'aboutir au mercaptosilane bloqué de formule (I) visé.

### II-3. Utilisation à titre d'agent de couplage

Comme indiqué supra, le composé de l'invention, grâce à sa double fonctionnalité, trouve une application industrielle avantageuse comme agent de couplage, destiné par exemple à assurer la liaison ou adhésion entre une matrice polymérique réactive (notamment une matrice de caoutchouc) et toute matière à surface hydroxylée, notamment minérale (par exemple, une fibre de verre) ou métallique (par exemple, un fil en acier au carbone ou en acier inoxydable).

Sans que ceci soit limitatif, il peut être notamment utilisé pour le couplage de charges blanches ou inorganiques renforçantes et d'élastomères diéniques, par exemple dans des compositions de caoutchouc destinées à la fabrication de pneumatiques. Par "charge inorganique renforçante", on entend de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Pour une telle utilisation, l'élastomère diénique est alors de préférence choisi dans le groupe des élastomères diéniques fortement insaturés constitué par les polybutadiènes (BR), les polyisoprènes de synthèse (IR), le caoutchouc naturel (NR), les copolymères de butadiène-styrène (SBR), les copolymères de butadiène-isoprène (BIR), les copolymères de butadiène-acrylonitrile (NBR), les copolymères d'isoprène-styrène (SIR), les copolymères de butadiène-styrène-isoprène (SBIR) et les mélanges de ces élastomères.

Lorsque le monohydroxysilane de l'invention est destiné au couplage (charge inorganique/élastomère diénique) dans une composition de caoutchouc formant par exemple tout ou partie d'une bande de roulement de pneumatique tourisme, l'élastomère diénique est alors de préférence un SBR ou un coupage (mélange) de SBR et d'un autre élastomère diénique tel que BR, NR ou IR. Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une température de transition vitreuse ("Tg" - mesurée selon norme ASTM D3418-82) comprise entre -20°C et -55°C, ce copolymère SBR, de préférence préparé en solution (SSBR), étant éventuellement utilisé en mélange avec un polybutadiène (BR) possédant de préférence plus de 90% de liaisons cis-1,4.

Lorsque la bande de roulement est destinée à un pneumatique utilitaire tel que Poids-lourd, l'élastomère diénique est alors de préférence un élastomère isoprénique, c'est-à-dire un élastomère diénique choisi dans le groupe constitué par le caoutchouc naturel (NR), les polyisoprènes de synthèse (IR), les différents copolymères d'isoprène et les mélanges de ces élastomères ; il s'agit alors plus préférentiellement de caoutchouc naturel ou d'un polyisoprène de synthèse du type cis-1,4 ayant un taux (% molaire) de liaisons cis-1,4 supérieur à 90%, plus préférentiellement encore supérieur à 98%.

Les mercpatosilanes bloqués de l'invention se sont révélés suffisamment efficaces à eux seuls pour le couplage d'un élastomère diénique et d'une charge inorganique renforçante telle que la silice, utilisés à un taux préférentiel supérieur à 1 pce (parties en poids pour cent parties d'élastomère), plus préférentiellement compris entre 2 et 20 pce. Ils peuvent avantageusement constituer le seul agent de couplage présent dans des compositions de caoutchouc renforcées de charge inorganique et destinées à la fabrication de pneumatiques.

A titre de charge inorganique renforçante, on citera les charges minérales du type siliceuse, en particulier de la silice (SiO₂), ou du type alumineuse, en particulier de l'alumine (Al₂O₃) ou des (oxyde)hydroxydes d'aluminium, ou encore des oxydes de titane renforçants, tels que décrits dans les brevets ou demandes de brevet précités.

### III. EXEMPLES DE REALISATION DE L'INVENTION

Dans les essais qui suivent, l'invention est mise en oeuvre avec un mercaptosilane bloqué conforme à l'invention particulier : le S-octanoylmercaptopropyldihydroxyméthylsilane.

### III-1 Synthèse du S-octanoylmercaptopropyldihydroxymethylsilane

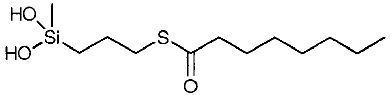

### a) Préparation du S-octanoylmercaptopropyldimethoxymethylsilane de numéro CAS [828241-23-2] :

Le produit intermédiaire G peut être préparé en milieu biphasique selon le mode opératoire décrit dans la demande WO 2005007660. Une autre possibilité consiste à le préparer selon la procédure suivante.

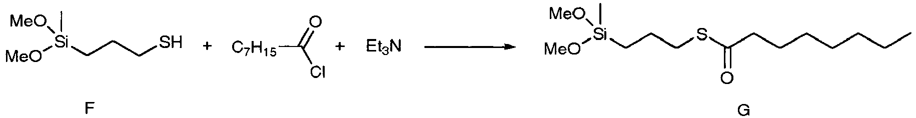

A une solution de 3-mercaptopropyldimethoxymethylsilane F de numéro CAS [31001-77-1] (20,0 g, 0,111 mol) et de triéthylamine (11,2 g, 0,111 mol) dans le cyclohexane (200 mL) maintenue à 5°C sous atmosphère inerte est ajouté goutte à goutte le chlorure d'octanoyle (18,0 g, 0,111 mol) pendant 30 minutes. La température du milieu réactionnelle reste comprise entre 5 et 8°C. Le milieu réactionnel est ensuite agité pendant 15 heures à température ambiante. Le précipité d'hydrochlorure de triéthylamine Et3N*HCl est filtré sur Celite. Après évaporation des solvants sous pression réduite à 25 °C le S-octanoylmercaptopropyldimethoxymethylsilane G de numéro CAS [828241-23-2] (32,6 g, 0,106 mol) est obtenu sous forme d'une huile incolore avec un rendement de 96%.

L'analyse RMN confirme la structure du produit obtenu avec une pureté molaire de 98 %.

### b) Préparation du S-octanoylmercaptopropyldihydroxymethylsilane :

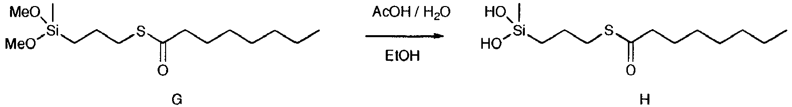

A un mélange d'acide acétique à 0,5 %, d' eau (85 mL) et d'éthanol (250 mL) est ajouté le S-octanoylmercaptopropyldimethoxymethylsilane G (42,0 g, 0,137 mol). La solution est agitée pendant 4 heures à température ambiante puis le mélange est versé sur une solution de chlorure de sodium (70 g) dans l'eau (1600 mL). Le produit est extrait par du diethylether (deux fois 250 mL). Après évaporation des solvants sous pression réduite à 15 °C le solide obtenu est recristallisé dans le pentane (400 mL) à -20°C pendant 4 à 5 heures. Les cristaux sont filtrés et séchés sur filtre pendant 30 min puis 2-3h sous pression réduite. Le produit obtenu (24,9 g) a un point de fusion de 63 °C. Après évaporation du filtrat sous pression réduite à 15 °C le reste obtenu est recristallisé une seconde fois dans le pentane (80 mL) pendant 4-5 heures à -20°C. Cette seconde fraction (6,5 g) à un point de fusion de 63°C.

Les deux fractions sont réunies puis recristallisées dans un mélange éther de pétrole (600 mL), éthanol, (10 mL) pendant 12 heures. Après filtration puis évaporation des solvants résiduels sous pression réduite pendant 2-3 heures, un solide blanc (25,8 g, 0,093 mol, rendement de 68 %) de point de fusion 65 °C est obtenu.

L'analyse RMN confirme la structure du S-octanoylmercaptopropyldihydroxymethylsilane H obtenu avec une pureté molaire supérieure à 93,5 %.

Si une pureté supérieure est requise, une dernière cristallisation dans un mélange éther de pétrole, (500 mL) éthanol (7 mL) pendant 15 heures permet d'obtenir un solide (16,9 g, rendement 44%) de pureté molaire supérieure à 99% (point de fusion 66°C).

### III-2 Préparation des compositions de caoutchouc

On procède pour les essais qui suivent de la manière suivante: on introduit dans un mélangeur interne, rempli à 70% et dont la température initiale de cuve est d'environ 90°C, l'élastomère diénique (coupage SBR et BR), la silice complétée par une faible quantité de noir de carbone, l'agent de couplage puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute l'agent de recouvrement (lorsque ce dernier est présent) et le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### III-3 Caractérisation des compositions de caoutchouc

Cet essai a pour but de démontrer les propriétés améliorées de compositions de caoutchouc dépourvue de zinc ou en présence de zinc, comportant un mercaptosilane bloqué selon l'invention comparée à une composition de caoutchouc« classique » comportant du zinc et à des compositions de caoutchouc dépourvues de zinc mais utilisant des agents de couplage traditionnellement utilisés dans les compositions de caoutchouc pour bandes de roulement de pneumatiques ayant de la silice à titre de charge renforçante.

On prépare pour cela 6 compositions à base d'un élastomère diénique (coupage SBR/BR) renforcées d'une silice hautement dispersible (HDS), ces compositions différant essentiellement par les caractéristiques techniques qui suivent :
- la composition C1 est une composition témoin « classique » contenant du zinc (1,5 pce de ZnO) et le composé TESPT (nom commercial : « Si69 ») à titre d'agent de couplage
- la composition C2 correspond à la composition C1 mais dépourvue de zinc,
- la composition C3 est dépourvue de zinc et comprend le composé MESPT (nom commercial : « RP74 ») fréquemment utilisé dans les bandes de roulement de pneumatique, à titre d'agent de couplage
- la composition C4 est dépourvue de zinc et comprend un mercaptosilane bloqué (nom commercial : « Silane NXT ») distinct de l'invention, à titre d'agent de couplage,
- la composition C5 comprend à titre d'agent de couplage un mercaptosilane bloqué conforme à l'invention, le S-octanoyl-mercapto-propyl-dihydroxy-méthylsilane, et est dépourvue de zinc,
- la composition C6 comprend à titre d'agent de couplage un mercaptosilane bloqué conforme à l'invention, le S-octanoyl-mercapto-propyl-dihydroxy-méthylsilane, et comprend également du zinc (1,5 pce de ZnO) de façon identique à la composition classique C1.

Afin que les propriétés des compositions C1 à C6 soient comparables, les agents de couplage des compositions C2 à C6 sont utilisés à un taux isomolaire en silicium comparativement à la composition témoin C1.

L'agent de couplage conventionnel utilisé dans la composition témoin C1 est le TESPT. On rappelle que le TESPT est le tétrasulfure de bis(3-triéthoxysilylpropyl) ayant pour formule développée (Et = éthyle) :

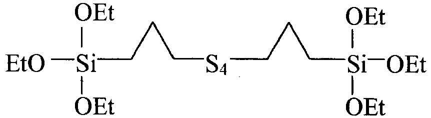

L'agent de couplage utilisé dans la composition C3 est le MESPT. On rappelle que le MESPT est le tétrasulfure de bis(3-diméthyléthoxysilylpropyl) ayant pour formule développée (Et = éthyle) :

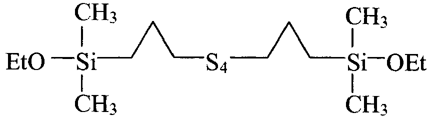

L'agent de couplage utilisé dans la composition C4 est le Silane NXT. On rappelle que le NXT est le S-octanoylmercaptopropyltriéthoxysilane ayant pour formule développée (Et = éthyle) :

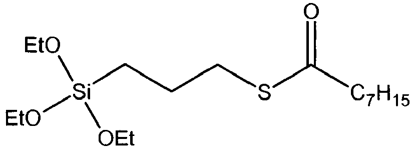

Les tableaux 1 et 2 donnent la formulation des différentes compositions (tableau 1 - taux des différents produits exprimés en pce ou parties en poids pour cent parties d'élastomère) ainsi que leurs propriétés avant et après cuisson (environ 40 min à 150°C) ; le système de vulcanisation est constitué par soufre et sulfénamide.

L'examen des résultats du tableau 2 concernant les propriétés avant cuisson montre tout d'abord que seule la composition utilisant le mercpatosilane conforme à l'invention C5, comparée à la composition témoin C-1 qui contient le taux classiquement utilisé de zinc, permet à la fois de maintenir un temps de grillage T5 acceptable (quasiment identique à celui de C1), tout en améliorant de façon remarquable la processabilité de la composition (Mooney beaucoup plus faible que pour la composition C1).

Les autres compositions C2, C3 ou C4 ayant des propriétés rédhibitoires pour leur utilisation en pneumatique à cause d'un temps de grillage beaucoup trop faible et présentant, de plus, pour les compositions C2 et C3 une très grande viscosité à cru (Mooney très élevé).

Par ailleurs, l'observation des propriétés après cuisson de ces compositions montre de façon tout à fait remarquable pour la composition C5 utilisant le mercaptosilane bloqué conforme à l'invention, comparée à la composition témoin C1, une hystérèse réduite, comme attesté par des valeurs de tan(δ)ₘₐₓ et ΔG* qui sont sensiblement diminuées ; ceci est un indicateur reconnu d'une réduction de la résistance au roulement des pneumatiques, et par voie de conséquence d'une diminution de la consommation d'énergie des véhicules automobiles équipés de tels pneumatiques.

On peut noter que la composition C4, non conforme à l'invention, présente également une hystérèse réduite par rapport à la composition C1, cependant cette propriété n'est pas exploitable en l'occurrence étant donné le très faible temps de grillage de la composition C4 qui la rend inutilisable en pneumatique.

La comparaison des compositions classique C1 et conforme à l'invention C6 fait apparaître l'amélioration des propriétés de processabilité (Mooney), du temps de grillage (T5 supérieur à 30) et de l'hystérèse (valeurs de tan(δ)ₘₐₓ et ΔG* abaissées) pour la composition conforme à l'invention C6.

Il est donc clair que même dans une formulation plus classique, comportant du zinc, la présence d'un agent de couplage conforme à l'invention permet une nette amélioration de propriétés significative de la composition de caoutchouc le comportant.

Il apparaît également clairement qu'une composition conforme à l'invention comportant à titre d'agent de couplage un mercaptosilane bloqué de formule (I) permet d'obtenir des propriétés équivalentes, voire améliorées (processabilité, hystérèse) par rapport à la composition classique témoin, sans utiliser de zinc contrairement à des compositions comportant d'autres agents de couplage y compris des mercaptosilanes bloqués mais de formule distincte de celle de l'invention.

On peut noter par ailleurs que l'utilisation d'un mercaptosilane bloqué conforme à l'invention, est particulièrement intéressante du point de vue de l'environnement. Elle permet à la fois de pallier les problèmes dûs à la suppression du zinc, et de régler le problème de dégagement de VOC (« volatile organic compounds »). En effet, le mercaptosilane bloqué conforme à l'invention ne possède aucun groupe alcoxyle (tel que les groupes éthoxyles du TESPT) étant en effet à l'origine du dégagement d'alcool (éthanol dans le cas du TESPT), tant au cours de la fabrication des compositions de caoutchouc elles-mêmes que lors de la cuisson des articles en caoutchouc incorporant ces compositions.

**Tableau 1**

| **Composition N°** | **C1** | **C2** | **C3** | **C4** | **C5** | **C6** |
|---|---|---|---|---|---|---|
| SBR (1) | 70 | 70 | 70 | 70 | 70 | 70 |
| BR (2) | 30 | 30 | 30 | 30 | 30 | 30 |
| Silice (3) | 80 | 80 | 80 | 80 | 80 | 80 |
| agent de couplage (4) | 6,4 | 6,4 | - | - | - | - |
| agent de couplage (5) | - | - | 4,9 | - | - | - |
| agent de couplage (6) | - | - | - | 8,9 | - | - |
| agent de couplage (7) | - | - | - | - | 6,8 | 6,8 |
| noir de carbone (8) | 5 | 5 | 5 | 5 | 5 | 5 |
| huile MES (9) | 6 | 6 | 6 | 6 | 6 | 6 |
| résine plastifiante (10) | 20 | 20 | 20 | 20 | 20 | 20 |
| DPG (11) | 1,5 | 1,5 | 1,5 | 1,5 | 1,5 | 1,5 |
| cire anti-ozone (12) | 1,5 | 1,5 | 1,5 | 1,5 | 1,5 | 1,5 |
| ZnO (13) | 1,5 | - | - | - | - | 1,5 |
| anti-oxydant (14) | 2 | 2 | 2 | 2 | 2 | 2 |
| acide stéarique (15) | 2 | 2 | 2 | 2 | 2 | 2 |
| soufre | 1 | 1 | 1 | 1 | 1 | 1 |
| accélérateur (16) | 2 | 2 | 2 | 2 | 2 | 2 |

| | | | | | | |
|---|---|---|---|---|---|---|
| (1) SSBR avec 25% de styrène, 59% de motifs polybutadiène 1-2 et 20% de motifs polybutadiène 1-4 trans (Tg = -24°C) ; taux exprimé en SBR sec (SBR étendu avec 9% d'huile MES, soit un total de SSBR + huile égal à 76 pce) ; (2) BR (Nd) avec 0,7% de 1-2 ; 1,7% de trans 1-4 ; 98% de cis 1-4 (Tg =-105°C) (3) silice "ZEOSIL 1165 MP" de la société Rhodia sous forme de microperles (BET et CTAB : environ 150-160 m2/g) ; (4) TESPT ("SI69" de la société Degussa) ; (5) MESPT ("RP74" de la société Rhodia) ; (6) S-octanoylmercaptopropyltriethoxysilane ("Silane NXT™" de GE Silicones) ; (7) S-octanoylmercaptopropyldihydroxymethylsilane (produit synthétisé) ; (8) N234 (société Degussa) ; (9) huile MES ("Catenex SNR" de Shell) ; (10) résine polylimonène ("Dercolyte L120" de la société DRT) ; (11) diphénylguanidine (Perkacit DPG de la société Flexsys) ; (12) mélange de cires anti-ozone macro- et microcristallines ; (13) oxyde de zinc (grade industriel - société Umicore) ; (14) N-1,3-diméthylbutyl-N-phényl-para-phénylènediamine ("Santoflex 6-PPD" de la société Flexsys) ; (15) stéarine ("Pristerene 4931" - société Uniqema) ; (16) N-cyclohexyl-2-benzothiazyl-sulfénamide ("Santocure CBS" de la société Flexsys). | | | | | | |

**Tableau 2**

| Composition N° | C1 | C2 | C3 | C4 | C5 | C6 |
|---|---|---|---|---|---|---|
| *Propriétés avant cuisson* | | | | | | |
| Mooney (UM) | 95 | 101 | 115 | 76 | 73 | 71 |
| T5 (min) | 18 | 11 | 14 | 12 | 16 | >30 |

| *Propriétés après cuisson* | | | | | | |
|---|---|---|---|---|---|---|
| ΔG* (MPa) | 5,81 | 5,27 | 4,39 | 3,59 | 4,61 | 4,42 |
| tan(δ)ₘₐₓ | 0,354 | 0,362 | 0,346 | 0,331 | 0,351 | 0,326 |

## Revendications

1. Mercaptosilane bloqué de formule générale I suivante :
(HO)₂R¹-Si-Z-S-C(=O)-A
dans laquelle :
- R¹ représente un groupe hydrocarboné monovalent choisi parmi les alkyles, linéaires ou ramifiés, les cycloalkyles ou les aryles, ayant de 1 à 18 atomes de carbone;
- A représente l'hydrogène ou un groupe hydrocarboné monovalent choisi parmi les alkyles, linéaires ou ramifiés, les cycloalkyles ou les aryles, ayant de 1 à 18 atomes de carbone,
- Z représente un groupe de liaison divalent comportant de 1 à 18 atomes de carbone.

2. Mercaptosilane selon la revendication 1, dans laquelle Z contient un ou plusieurs hétéroatomes choisis parmi O, S et N.

3. Mercaptosilane selon l'une quelconque des revendications 1 ou 2, dans laquelle :
- R¹ est choisi parmi méthyle, éthyle, n-propyle et isopropyle, de préférence parmi méthyle et éthyle ;
- A est choisi parmi les alkyles ayant de 1 à 18 atomes de carbone et le radical phényle
- Z est choisi parmi les alkylènes en C₁-C₁₈ et les arylènes en C₆-C₁₂.

4. Mercaptosilane selon la revendication 3, dans laquelle Z est choisi parmi les alkylènes en C₁-C₁₀.

5. Mercaptosilane selon la revendication 4, dans laquelle Z est choisi parmi les alkylènes en C₁-C₄.

6. Mercaptosilane selon l'une quelconque des revendications 3 à 5, dans laquelle R1 est un méthyle.

7. Mercaptosilane selon l'une quelconque des revendications 3 à 6, dans laquelle A est choisi parmi les alkyles ayant de 1 à 7 atomes de carbone et le radical phényle.

8. Mercaptosilane selon l'une quelconque des revendications 3 à 7, dans laquelle R1 est un méthyle, Z est un propylène et A est un heptyle.

9. Procédé d'obtention d'un mercaptosilane selon l'une quelconque des revendications 1 à 8, **caractérisé en ce qu'**il comporte les étapes suivantes :
- on part d'un mercaptosilane bloqué (ci-après produit B) de formule (B):
- (R²O)₂R1 Si Z S C(=O) A
- dans laquelle :
- R1, A et Z ont la même signification que dans la formule (I) ;
- R2, identiques ou différents, représentent un groupe hydrocarboné monovalent choisi parmi les alkyles ayant de 1 à 6, de préférence de 1 à 3;
- on conduit une hydrolyse en milieu acide permettant d'aboutir au mercaptosilane bloqué de formule (I) visé.

10. Utilisation, à titre d'agent de couplage, d'un mercaptosilane selon l'une quelconque des revendications 1 à 8.

11. Utilisation, à titre d'agent de couplage, d'un mercaptosilane selon l'une quelconque des revendications 1 à 8, dans une composition de caouthcouc.

## Patentansprüche

1. Blockiertes Mercaptosilan der folgenden allgemeinen Formel I:
(HO)₂R¹-Si-Z-S-C(=O)-A
worin:
- R¹ für eine einwertige Kohlenwasserstoffgruppe, die aus linearen oder verzweigten Alkylgruppen, Cycloalkylgruppen oder Arylgruppen ausgewählt ist, mit 1 bis 18 Kohlenstoffatomen, steht;
- A für Wasserstoff oder eine einwertige Kohlenwasserstoffgruppe, die aus linearen oder verzweigten Alkylgruppen, Cycloalkylgruppen oder Arylgruppen ausgewählt ist, mit 1 bis 18 Kohlenstoffatomen steht,
- Z für eine zweiwertige Brückengruppe mit 1 bis 18 Kohlenstoffatomen steht.

2. Mercaptosilan nach Anspruch 1, wobei Z ein oder mehrere aus O, S und N ausgewählte Heteroatome enthält.

3. Mercaptosilan nach einem der Ansprüche 1 oder 2, wobei:
- R¹ aus Methyl, Ethyl, n-Propyl und Isopropyl, vorzugsweise aus Methyl und Ethyl, ausgewählt ist;
- A aus Alkylgruppen mit 1 bis 18 Kohlenstoffatomen und dem Phenylrest ausgewählt ist;
- Z aus C₁-C₁₈-Alkylengruppen und C₆-C₁₂-Arylengruppen ausgewählt ist.

4. Mercaptosilan nach Anspruch 3, wobei Z aus C₁-C₁₀-Alkylengruppen ausgewählt ist.

5. Mercaptosilan nach Anspruch 4, wobei Z aus C₁-C₄-Alkylengruppen ausgewählt ist.

6. Mercaptosilan nach einem der Ansprüche 3 bis 5, wobei R1 ein Methyl ist.

7. Mercaptosilan nach einem der Ansprüche 3 bis 6, wobei A aus Alkylgruppen mit 1 bis 7 Kohlenstoffatomen und dem Phenylrest ausgewählt ist.

8. Mercaptosilan nach einem der Ansprüche 3 bis 7, wobei R1 ein Methyl ist, Z ein Propylen ist und A ein Heptyl ist.

9. Verfahren zum Erhalt eines Mercaptosilans nach einem der Ansprüche 1 bis 8, **dadurch gekennzeichnet, dass** man:
- von einem blockierten Mercaptosilan (nachstehend Produkt B) der Formel (B) :
- (R²O)₂R1 Si Z S C (=O) A
- worin:
- R1, A und Z die gleiche Bedeutung wie in Formel (I) besitzen;
- die Reste R2 gleich oder verschieden sind und für eine einwertige Kohlenwasserstoffgruppe, die aus Alkylgruppen mit 1 bis 6, vorzugsweise 1 bis 3, ausgewählt sind, steht; ausgeht;
- eine Hydrolyse in saurem Medium durchführt, wodurch man zu dem angestrebten blockierten Mercaptosilan der Formel (I) gelangt.

10. Verwendung eines Mercaptosilans nach einem der Ansprüche 1 bis 8 als Kupplungsmittel.

11. Verwendung eines Mercaptosilans nach einem der Ansprüche 1 bis 8 als Kupplungsmittel in einer Kautschukzusammensetzung.

## Claims

1. Blocked mercaptosilane of general formula I below:
(HO)₂R¹-Si-Z-S-C(=O)-A
in which:
- R¹ represents a monovalent hydrocarbon-based group chosen from alkyls, which are linear or branched, cycloalkyls or aryls, having from 1 to 18 carbon atoms;
- A represents hydrogen or a monovalent hydrocarbon-based group chosen from alkyls, which are linear or branched, cycloalkyls or aryls, having from 1 to 18 carbon atoms;
- Z represents a divalent bonding group comprising from 1 to 18 carbon atoms.

2. Mercaptosilane according to Claim 1, in which Z contains one or more heteroatoms chosen from O, S and N.

3. Mercaptosilane according to either of Claims 1 and 2, in which:
- R¹ is chosen from methyl, ethyl, n-propyl and isopropyl, preferably from methyl and ethyl;
- A is chosen from alkyls having from 1 to 18 carbon atoms and the phenyl radical;
- Z is chosen from C₁-C₁₈ alkylenes and C₆-C₁₂ arylenes.

4. Mercaptosilane according to Claim 3, in which Z is chosen from C₁-C₁₀ alkylenes.

5. Mercaptosilane according to Claim 4, in which Z is chosen from C₁-C₄ alkylenes.

6. Mercaptosilane according to any one of Claims 3 to 5, in which R¹ is a methyl.

7. Mercaptosilane according to any one of Claims 3 to 6, in which A is chosen from alkyls having from 1 to 7 carbon atoms and the phenyl radical.

8. Mercaptosilane according to any one of Claims 3 to 7, in which R¹ is a methyl, Z is a propylene and A is a heptyl.

9. Process for preparing a mercaptosilane according to any one of Claims 1 to 8, **characterized in that** it comprises the following steps:
- starting from a blocked mercaptosilane (hereinbelow product B) of formula (B):
- (R²O)₂R¹-Si-Z-S-C(=O)-A
- in which:
- R¹, A and Z have the same meaning as in formula (I);
- R², which are identical or different, represent a monovalent hydrocarbon-based group chosen from alkyls having from 1 to 6, preferably from 1 to 3;
- a hydrolysis is carried out in an acid medium that makes it possible to result in the targeted blocked mercaptosilane of formula (I).

10. Use, as coupling agent, of a mercaptosilane according to any one of Claims 1 to 8.

11. Use, as coupling agent, of a mercaptosilane according to any one of Claims 1 to 8, in a rubber composition.
